(19) Europäisches Patentamt / European Patent Office / Office européen des brevets

(11) **EP 2 782 882 B1**

(12) **EUROPÄISCHE PATENTSCHRIFT**

(45) Veröffentlichungstag und Bekanntmachung des Hinweises auf die Patenterteilung:
**06.07.2016 Patentblatt 2016/27**

(21) Anmeldenummer: **12788215.7**

(22) Anmeldetag: **21.11.2012**

(51) Int Cl.:
*C03C 3/062* (2006.01)     *C03C 3/068* (2006.01)
*C03C 10/02* (2006.01)     *C03C 4/16* (2006.01)
*H01B 3/08* (2006.01)

(86) Internationale Anmeldenummer:
**PCT/EP2012/073177**

(87) Internationale Veröffentlichungsnummer:
**WO 2013/076116 (30.05.2013 Gazette 2013/22)**

(54) **GLASKERAMIK ALS DIELEKTRIKUM IM HOCHFREQUENZBEREICH**

GLASS-CERAMIC AS DIELECTRIC IN THE HIGH-FREQUENCY RANGE

VITROCÉRAMIQUE SERVANT DE DIÉLECTRIQUE DANS LA PLAGE HAUTE FRÉQUENCE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **24.11.2011 DE 102011119798**

(43) Veröffentlichungstag der Anmeldung:
**01.10.2014 Patentblatt 2014/40**

(73) Patentinhaber: **SCHOTT AG**
**55122 Mainz (DE)**

(72) Erfinder:
• **HOVHANNISYAN, Martun**
**55128 Mainz (DE)**
• **LETZ, Martin**
**55128 Mainz (DE)**
• **KISSL, Gordon**
**55262 Heidesheim (DE)**

(74) Vertreter: **Witte, Weller & Partner Patentanwälte mbB**
**Postfach 10 54 62**
**70047 Stuttgart (DE)**

(56) Entgegenhaltungen:
**DE-A1-102008 011 206     GB-A- 795 731**
**JP-A- 2006 124 201     JP-A- 2011 195 440**
**US-A- 4 870 539**

**Beschreibung**

Die Erfindung betrifft eine Glaskeramik, die als Dielektrikum im Hochfrequenzbereich (Frequenz > 200 MHz), insbesondere im Gigahertzbereich (Frequenz f > 1 GHz) anwendbar ist.

Für eine Reihe von Anwendungen im Hochfrequenzbereich sind spezielle Werkstoffe erforderlich, die eine möglichst hohe relative Permittivität $\varepsilon$ bei einem möglichst geringen dielektrischen Verlust (tan $\delta$) aufweisen. Zum Einen um kleine Antennenbauformen zu ermöglichen und zum Anderen um Verstimmungen im Nahbereich durch den Körper eines Benutzers (sog. "Body Loading") zu vermeiden, ist eine dielektrische Aufladung bei Antennen, Filtern und andern Einrichtungen von besonderer Bedeutung. Hierzu sind Dielektrika erforderlich, die eine hohe relative Permittivität aufweisen, mit $\varepsilon \geq 15$, sowie einen geringen dielektrischen Verlust (tan $\delta$) von höchstens $10^{-2}$ vorzugsweise geringer, im Hochfrequenzbereich. Ferner soll die Temperaturabhängigkeit der Resonanzfrequenz $\tau_f$ möglichst gering sein. Schließlich soll sich ein derartiges Material auf möglichst einfache und kostengünstige Weise verarbeiten lassen, um endformnahe Konturen (Near-Net-Shape) kostengünstig zu ermöglichen.

Im Stand der Technik ist eine Reihe von keramischen Materialien bekannt, die durch Sinterprozesse verarbeitet werden. Glaskeramiken sind ebenfalls bekannt, vgl. z.B. ein $BiNbO_4$-System, das aus Mirsaneh et al., "Circularly Loaded Dielectric-Loaded Antennas: Current Technology and Future Chalanges", Adv. Funct. Materials 18, (2008), S. 1-8 zur Anwendung bei dielektrisch geladenen Antennen für den Gigahertzbereich offenbart ist. Dieses Material kann zur Herstellung der drei hauptsächlich genutzten Formen von Antennen, der zirkular polarisierten DLA-Helixantenne (D-LQH-Antenne) und der quadratischen Patch-Antenne, sowie SMD-Antennen, genutzt werden. Hierzu wird zunächst ein Glas der Zusammensetzung von 30 Mol% $Bi_2O_3$, 30 Mol% $Nb_2O_5$, 30 Mol% $B_2O_3$ und 10 Mol% $SiO_2$ in herkömmlicher Weise bei 1250°C zwei Stunden lang erschmolzen.

Dieses Glas wurde in zylindrische Formen gegossen, bei 500 bis 520°C entspannt und langsam auf Raumtemperatur abgekühlt. Anschließend erfolgte eine Kristallisierung bei verschiedenen Temperaturen zwischen 600°C und 1000°C. Als optimaler Wert für Antennenanwendungen wird bei einer Wärmebehandlung bei 960°C eine relative Permittivität $\varepsilon$ von 15 angegeben mit einem Gütefaktor Q $f_0$ von 15.000 GHz und einem Temperaturkoeffizienten der Resonanzfrequenz $\tau_f$ von -80 MK$^{-1}$. Als kristalline Phase wurde hierbei im Wesentlichen orthorhombisches $BiNbO_4$ charakterisiert.

Dieses System unter Verwendung von Wismut und Niob ist im Hinblick auf die Rohmaterialien sehr teuer.

Daneben gibt es eine Reihe von gesinterten Keramikmaterialien (vgl. US 6,184,845 B1, US 2007/063902 A1). Darin wird als dielektrisches Material für den Keramikkern einer dielektrisch geladenen D-LQH-Antenne ein gesintertes Keramikmaterial auf der Basis von Zirkon-Titanat bzw. auf der Basis von Zirkon-Zinn-Titanat mit einer relativen Permittivität von etwa 36 angegeben. Das Material soll durch Extrudieren oder Pressen und anschließendes Sintern hergestellt werden.

Weitere gesinterte Materialien sind in der Übersicht von M.T. Sebastian et al., "Low loss dielectric materials for LTCC applications", International Materials Reviews,. Vol. 53, 2008, S. 57-90 angegeben. Auch wenn diese Materialien teilweise als "Glaskeramiken" bezeichnet sind, so handelt es sich hierbei doch um gesinterte Materialien, da sie durch das Sintern einer Mischung von glasigen und kristallinen Pulvern hergestellt werden.

Aus der US 2002/0037804 A1 und der US 2004/0009863 A1 sind ferner dielektrische Keramiken bekannt, die diverse Kristallphasen, wie etwa $CaTiO_3$, $SrTiO_3$, $Ba\,Ti_4O_9$, $La_2Ti_2O_7$, $Nd_2Ti_2O$, $Ba_2Ti_9O_{20}$, $Mg_2TiO_4$, $Mg_2SiO_4$, $Zn_2TiO_4$ usw. bilden sollen, die für hohe Gütefaktoren verantwortlich sein sollen. Auch hierbei handelt es sich um gesinterte Keramiken.

Durch Sintern hergestellte Dielektrika weisen eine Reihe von Nachteilen auf: So ist jeder Sinterprozess immer mit einer gewissen Schrumpfung verbunden, was zur Geometrieungenauigkeiten und entsprechender Nachbearbeitung führt. Ferner ergibt sich bei jedem Sinterprozess eine gewisse Restporosität, die nachteilig bei einer Metallisierung der Oberfläche ist. Das Metall dringt in die Poren ein und erhöht den dielektrischen Verlust des Dielektrikums.

Außerdem ist die Herstellung gesinterter Materialien grundsätzlich relativ aufwändig und teuer.

Aus der JP 2006124201 A ist ferner ein bleifreies Glas bekannt, das zur Herstellung eines Dielektrikums für eine gedruckte Schaltung mit einer hohen Dielektrizitätskonstante und einem kleinen elektrischen Verlust verwendet werden soll. Das Glas enthält (in Mol-%): 25 bis 45 $SiO_2$, 5 bis 25 BaO, 18 bis 35 $TiO_2$, 1 bis 10 $Al_2O_3$, 0 bis 15 $B_2O_3$, 0 bis 15 MgO+CaO+SrO, 0 bis 7 $WO+ZrO_2$, mit ZnO < 1. Es soll beim Tempern $BaTi_4O_0$ auskristallisieren.

Aus der JP 2011-195440 A, die der deutschen Patentanmeldung DE 10 2010 012 524.5 entspricht, ist ferner eine Glaskeramik bekannt mit den folgenden Bestandteilen (in Mol-% auf Oxidbasis):

| | |
|---|---|
| $SiO_2$ | 5 - 50 |
| $Al_2O_3$ | 0 - 20 |
| $B_2O_3$ | 0 - 25 |
| BaO | 0 - 25 |

(fortgesetzt)

| | |
|---|---|
| TiO$_2$ | 10 - 60 |
| RE$_2$O$_3$ | 5 - 35 |

wobei Ba teilweise durch Sr, Ca, Mg ersetzt sein kann, wobei RE Lanthan, ein anderes Lanthanoid oder Yttrium ist, und wobei Ti teilweise durch Zr, Hf, Y, Nb, V, Ta ersetzt sein kann.

Mit dieser Glaskeramik lassen sich qualitativ hochwertige Dielektrika herstellen, die insbesondere für Hochfrequenzanwendungen, wie Antennen, geeignet sind. Als nachteilig hat sich hierbei jedoch gezeigt, dass auch diese Glaskeramik nicht zur Herstellung von Antennen optimiert ist, was eine nachfolgende Metallisierung der Oberfläche erfordert. Hierfür ist die Restporosität noch relativ hoch. Außerdem sind die Rohstoffkosten für die bekannte Glaskeramik mit RE-Ti-System und Nb-Ti-Systemen ziemlich hoch.

Aus der DE 10 2008 011 206 A1 ist ferner eine Glaskeramik bekannt, die insbesondere als Bestandteil eines Kondensators oder eines Hochfrequenzfilters geeignet ist und die folgende Bestandteile in Mol.-% aufweist 14,2 SiO$_2$, 7,1 Al$_2$O$_3$, 42,9 BaO. 35,9 TiO$_2$. Diese ist jedoch für Kondensatoren bzw. Hochfrequenzfilter optimiert.

Vor diesem Hintergrund liegt der Erfindung die Aufgabe zugrunde, einen verbesserten Werkstoff anzugeben, der als Dielektrikum für hochfrequente Anwendungen einsetzbar ist, eine hohe relative Permittivität und einen geringen dielektrischen Verlust aufweist. Ferner soll der Werkstoff auf möglichst einfache und kostengünstige Weise herstellbar und verarbeitbar sein. Insbesondere soll der Werkstoff für die Herstellung von Antennen besonders geeignet sein.

Diese Aufgabe wird durch eine Glaskeramik gelöst, die mindestens die folgenden Bestandteile (in Mol-% auf Oxidbasis) aufweist:

| | |
|---|---|
| SiO$_2$ | 4 - 8 |
| Al$_2$O$_3$ | 7 - 11 |
| B$_2$O$_3$ | 0 - 1 |
| TiO$_2$ | 45 - 55 |
| RE$_2$O$_3$ | 0,1 - <5 |
| BaO | 15 - 30 |
| ZrO$_2$ | 5 - 10 |

$$10 \leq SiO_2 + Al_2O_3 + B_2O_3 \leq 20$$

wobei RE Lanthanoder ein anderes Lanthanoid ist, und wobei Ti-teilweise, vorzugsweise bis zu 10 % des obligatorischen Anteils, durch Hf, Nb, V, Ta ersetzt sein kann ("solid solution", Festkörperlösung).

Es hat sich gezeigt, dass mit einer derartigen Glaszusammensetzung homogene Gläser erschmolzen werden können, die anschließend durch eine Keramisierungsbehandlung in eine homogene Glaskeramik überführt werden können, die sich durch eine hohe relative Permittivität, einen geringen dielektrischen Verlust-und eine geringe Temperaturabhängigkeit der Resonanzfrequenz auszeichnet. Das Material lässt sich als Glaskeramik auf einfache und kostengünstige Weise herstellen und ermöglicht eine endkonturnahe Formgebung durch schmelztechnologische Verfahren, insbesondere durch Gießen oder gegebenenfalls durch Pressen.

. Im Rahmen dieser Anmeldung wird unter dem Begriff "Glaskeramik" ein Material verstanden, das ausgehend von einem homogenen, schmelztechnologisch hergestellten Glas durch eine gezielte Temperaturbehandlung in einen teilweise kristallinen Körper überführt wird, wobei eine Vielzahl von Kristalliten im Wesentlichen homogen verteilt in einer glasigen Restphase eingebettet ist.

Soweit im Rahmen dieser Anmeldung Zusammensetzungen in der Form angegeben sind, dass darin bestimmte Bestandteile enthalten sind oder dass sie bestimmte Bestandteile aufweisen, sind diese immer so zu verstehen, dass beliebige weitere Bestandteile darin enthalten sein können (offene Zusammensetzung).

In einer weiteren Ausführungsform der Erfindung sind die angegebenen Zusammensetzungen jedoch auch so zu verstehen, dass nur die jeweils angegebenen Bestandteile, enthalten sind (geschlossene Zusammensetzung), abgesehen von unvermeidbaren Verunreinigungen, die durch die Natur der Glasherstellung bedingt sind. Je nach der Reinheit der verwendeten Rohstoffe sind solche unvermeidbaren Verunreinigungen auf maximal 1 Gew.-%, vorzugsweise auf 0,5 Gew.-%, weiter vorzugsweise auf 0,1 Gew.-%, weiter vorzugsweise auf 0,05 Gew.-%, oder sogar auf 0,01 Gew.-% beschränkt.

Soweit im Rahmen dieser Anmeldung Zusammensetzungen in der Form angegeben sind, dass sie aus bestimmten Bestandteilen bestehen, sind diese Zusammensetzungen immer so zu verstehen, dass darin nur die angegebenen Bestandteile enthalten sind (geschlossene Zusammensetzung), allerdings mit der Maßgabe, dass unvermeidbare Verunreinigungen, die durch die Natur der Glasherstellung bedingt sind, enthalten sein können. Je nach der Reinheit der verwendeten Rohstoffe, sind solche unvermeidbaren Verunreinigungen auf maximal 1 Gew.-%, vorzugsweise auf 0,5 Gew.-%, weiter vorzugsweise auf 0,1 Gew.-%, weiter vorzugsweise auf 0,05 Gew.-%, oder sogar auf 0,01 Gew.-% beschränkt.

Soweit im Rahmen dieser Anmeldung in Ausführungsbeispielen durch Aufzählung bestimmter Bestandteile angegeben sind, sind diese Angaben als geschlossene Zusammensetzungen zu verstehen, allerdings mit der Maßgabe, dass unvermeidbare Verunreinigungen, die durch die Natur der Glasherstellung bedingt sind, enthalten sein können. Je nach der Reinheit der verwendeten Rohstoffe, sind solche unvermeidbaren Verunreinigungen auf maximal 1 Gew.-%, vorzugsweise auf 0,5 Gew.-%, weiter vorzugsweise auf 0,1 Gew.-%, weiter vorzugsweise auf 0,05 Gew.-%, oder sogar auf 0,01 Gew.-% beschränkt.

Gemäß einer weiter bevorzugten Ausgestaltung der Erfindung beträgt der Gehalt an $RE_2O_3$ 0,1 bis 4,9 Mol-%, weiter bevorzugt 0,5 bis 4,5 Mol-%, weiter bevorzugt 0,5 bis 4 Mol-%, besonders bevorzugt 1 bis 3,5 Mol-%, wobei RE vorzugsweise nur Lanthan oder ein anderes Lanthanoid ist.

Ferner kann die Glaskeramik Läutermittel in üblichen Mengen enthalten, wobei es sich vorzugsweise um 0,01 bis 3 Mol% eines Läutermittels handeln kann, das vorzugsweise aus der Gruppe ausgewählt ist, die durch $Sb_2O_3$ und $As_2O_3$ gebildet ist.

Die erfindungsgemäße Glaskeramik weist vorzugsweise einen dielektrischen Verlust (tan $\delta$) von höchstens $10^{-2}$, vorzugsweise von höchstens $10^{-3}$ bei Hochfrequenzanwendungen (f > 200 MHz) auf.

Ferner weist die Glaskeramik vorzugsweise eine relative Permittivität $\varepsilon$ von mindestens 15, vorzugsweise > 18, vorzugsweise im Bereich von 20 bis 80 auf.

Die erfindungsgemäße Glaskeramik zeichnet sich ferner vorzugsweise durch eine Temperaturabhärigigkeit der Resonanzfrequenz $\tau_f$ von höchstens 200 ppm/K, vorzugsweise höchstens 50 ppm/K, besonders bevorzugt von höchstens 10 ppm/K aus.

In weiter vorteilhafter Ausgestaltung der Erfindung weist die erfindungsgemäße Glaskeramik mindestens eine Mischkristallphase auf der Basis von RE, Ti, Si, O und ggf, Ba auf, wobei Ba zumindest teilweise durch Sr, Ca, Mg ersetzt sein kann, wobei RE ein Lanthanoid oder Yttrium ist und wobei Ti zumindest teilweise durch Zr, Hf, Y, Nb, V, Ta ersetzt sein kann (solid solution).

Insbesondere kann die erfindungsgemäße Glaskeramik mindestens eine Mischkristallphase enthalten, die aus der Gruppe ausgewählt ist, die durch $(BaO)_x(RE_2O_3)_y(SiO_2)_z(TiO_2)_u$, z.B. $RE_2Ti_2O_7$, -$RE_2Ti_2SiO_9$, $BaTi_4O_9$ und $RE_4Ti_9O_{24}$ gebildet ist, wobei RE Lanthan, ein anderes Lanthanoid oder Yttrium ist, wobei bis zu 10 % von Ba durch Sr, Ca, Mg ersetzt sein können, und wobei bis zu 10 % Ti durch Zr, Hf, Y, Nb, V, Ta ersetzt sein kann (solid solution).

Gemäß einer bevorzugten Ausgestaltung enthält die Gläskeramik als überwiegende Mischkristallphase $BaTi_4O_9$, wobei Ba teilweise durch La, Ca oder Sr ersetzt sein kann und wobei Ti teilweise durch Zr, Hf, Y, Nb, V, Ta ersetzt sein kann (solid solution).

Eine solche Glaskeramik lässt sich mit hoher Qualität und dennoch sehr niedrigen Rohstoffkosten herstellen, die etwa um einen Faktor 10 bis 100 niedriger liegen als bei Glaskeramiken mit La-Ti und Nb-Ti Systemen.

Gemäß einer bevorzugten Ausgestaltung enthält die Glaskeramik als überwiegende Mischkristallphase $(BaO)_x(RE_2O_3)y(Al_2O_3)z(TiO_2)_u$, insbesondere $Ba_4Al_2Ti_{10}O_{27}$, wobei Ba teilweise durch La, Ca oder Sr ersetzt sein kann und wobei Ti teilweise durch Zr, Hf, Y, Nb, V, Ta ersetzt sein kann.

Mit der überwiegenden Mischkristallphase $Ba_4Al_2Ti_{10}O_{27}$ wurden besonders gute Ergebnisse gefunden, mit einer guten Glasstabilität des Precurserglases vor der Keramisierung und mit sehr hochwertigen Glaskeramiken, bei gleichzeitig sehr niedrigen Rohstoffkosten.

Die erfindungsgemäße Glaskeramik kann vorzugsweise einen kristallinen Anteil von mindestens 30 Vol.-%, vorzugsweise bis zu 95 Vol.-%, aufweisen.

Die durchschnittliche Kristallitgröße beträgt vorzugsweise 10 nm bis 50 $\mu$m und liegt vorzugsweise im Bereich von 100 nm bis 1 $\mu$m.

Die erfindungsgemäße Glaskeramik ist insbesondere als Dielektrikum für einen dielektrischen Resonator, ein elektronisches Frequenzfilterelement oder ein Antennenelement im Hochfrequenzbereich (f > 200 MHz) geeignet.

Insbesondere ist eine Verwendung als Dielektrikum für ein zylindrisches Antennenelement oder ein Patch-Antennenelement geeignet.

Ein Dielektrikum mit einem dielektrischen Verlust von höchstens $10^{-2}$ im Hochfrequenzbereich lässt sich mit den folgenden Schritten herstellen:

- Erschmelzen und Homogenisieren eines Ausgangsglases, das die Bestandteile (in Mol-% auf Oxidbasis) enthält

| | |
|---|---|
| $SiO_2$ | 1 - 30 |
| $Al_2O_3$ | 0 - 20 |

(fortgesetzt)

| | |
|---|---|
| $B_2O_3$ | 0 - 25 |
| $TiO_2$ | 10 - 70 |
| $RE_2O_3$ | 0 - <5 |
| BaO | 5 - 35 |

$$SiO_2 + Al_2O_3 + B_2O_3 \quad < \quad 25$$

wobei RE Lanthan, ein anderes Lanthanoid oder Yttrium ist, und wobei Ti teilweise, vorzugsweise bis zu 10 % des obligatorischen Anteils, durch Zr, Hf, Y, Nb, V, Ta ersetzt sein kann,

- Gießen des Ausgangsglases in eine gewünschte Form;
- Abkühlen des Ausgangsglases auf Raumtemperatur;
- Keramisieren des Ausgangsglases durch eine Wärmebehandlung.

Bevorzugt wird das Ausgangsglas durch ein schmelztechnologisches Verfahren in eine endformnahe Form (Near-Net-Shape) gebracht.

Weitere Merkmale und Vorteile der Erfindung ergeben sich aus der nachfolgenden Beschreibung bevorzugter Ausführungsbeispiele unter Bezugnahme auf die Zeichnung. Es zeigen:

Fig. 1    das Ergebnis einer DTA eines ersten Ausführungsbeispiels;

Fig. 2    das Ergebnis einer DTA eines zweiten Ausführungsbeispiels;

Fig. 3    eine Zusammenfassung der wesentlichen Eigenschaften einer Versuchsserie von erfindungsgemäßen Glaskeramiken, die als überwiegende Mischkristallphase $Ba_4Al_2Ti_{10}O_{27}$ enthält, in Abhängigkeit von der Keramisierungstemperatur;

Fig. 4    von zwei Proben, die als überwiegende Mischkristallphase $Ba_4Al_2Ti_{10}O_{27}$ enthalten, je eine Röntgendiffraktometeruntersuchung (XRD) und eine DTA-Untersuchung;

Fig.5    von einer weiteren Probe mit der überwiegenden Mischkristallphase $Ba_4Al_2Ti_{10}O_{27}$ mit geringen Zusätzen von ZnO und $B_2O_3$, eine Röntgendiffraktometeruntersuchung (XRD) und eine DTA-Untersuchung und

Fig. 6    das Zustandsdiagramm von $B_2O_3$ - CaO, das in eutektischer Zusammensetzung als Flussmittel bei der Probe gemäß Fig. 5 zugesetzt wurde.

Beispiele

In Tabelle 1 sind verschiedene Glaszusammensetzungen für ein Ausgangsglas im System Ba-Ti-Zr-Si-O zusammengestellt, teilweise mit Zusätzen von Al, B, RE. Dabei sind die Beispiele 1 bis 7 nicht von der Erfindung umfasst.

Die verschiedenen Glasproben gemäß Beispiel 1 bis 7 werden zunächst unter Verwendung von üblichen Ausgangsmaterialien in üblicher Weise geschmolzen und homogenisiert, wobei Platintiegel, Pt/Ir-Tiegel, Pt/Rh-Tiegel, Quarztiegel oder Aluminiumoxidtiegel verwendet werden können. Die Proben werden zunächst 2 Stunden bei 1350 °C erschmolzen, dann 30 Minuten bei 1400 °C geläutert, 20 Minuten mit einem Platinrührer gerührt und homogenisiert, 10 Minuten stehen gelassen und dann in geeignete Formen etwa aus Stahl, Graphit, Aluminiumoxid oder Quarzglas abgegossen und damit in eine endkontumahe Form gebracht

Nach Abkühlung auf Raumtemperatur wird das Glas einem Keramislerungsschritt unterzogen.

Ein typischer Keramisierungszyklus mit Hilfe von einem Infrarot-Heizofens lautet wie folgt

- Aufheizen mit 300 K/min auf 1050°C;
- Halten bei 1050°C für 7 Sekunden;
- Aufheizen auf 1200°C mit einer Heizrate von 50 K/min;
- Halten bei 1200°C 15 Minuten lang;
- Abkühlen auf etwa 500°C durch Abschalten des Ofens mit einer Abkühlgeschwindigkeit von ca. 50 K/min;
- Entnahme der Probe aus dem Ofen, wenn eine Temperatur von etwa 500°C erreicht ist.

Alternativ kann ein Keramisierungszyklus in einem konventionellen Ofen durch Tempern bei 925 °C über 0,5 bis 20 Stunden durchgeführt werden.

Sofern notwendig, können die Formkörper nach dem Gießen noch durch eine Schleif- oder Polierbehandlung nachgearbeitet werden bzw. im Falle der Herstellung von zylindrischen Formkörpern durch spitzenloses Außenrundschleifen bearbeitet werden.

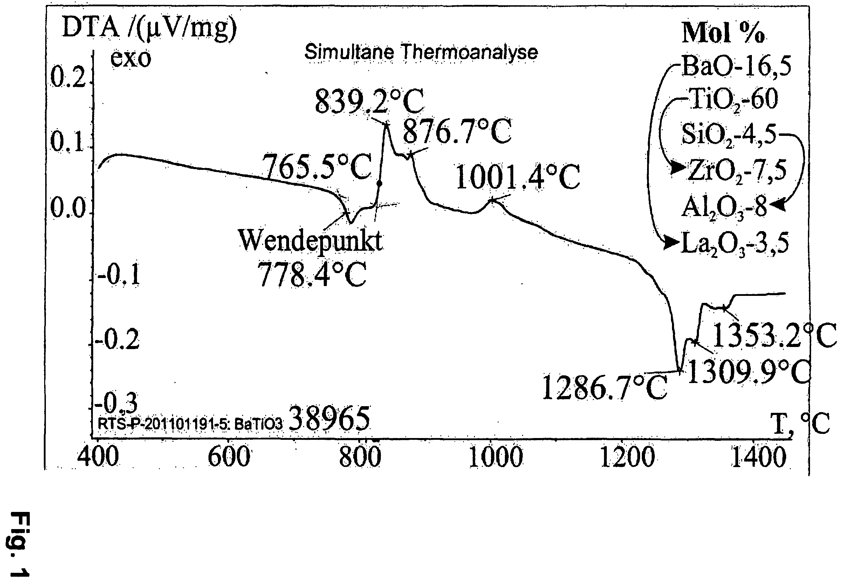

Fig. 1 zeigt eine Differentialthermoanalyse (DTA) des Beispiels 5 gemäß Tab. 1. Die Peaks zeigen die Bildung unterschiedlicher Kristallphasen an, wobei die überwiegende Kristallphase $BaTi_4O_9$ ist.

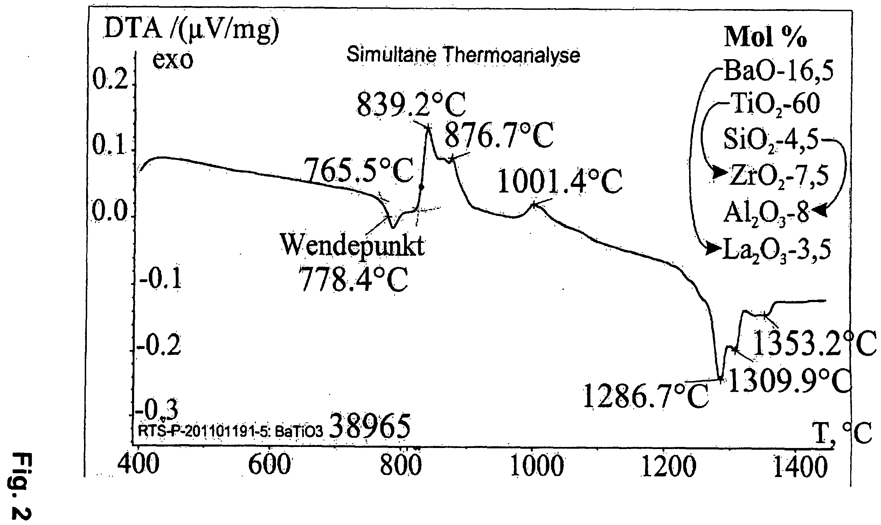

Fig. 2 zeigt eine DTA des Beispiels 6 gemäß Tab. 1. Die Peaks zeigen die Bildung von Kristallphasen an, wobei der Peak bei der niedrigsten Temperatur bei 841 °C die Bildung von $BaTi_4O_9$ anzeigt.

Bei den Glaszusammensetzungen im System $BaO$-$SiO_2$-$TiO_2$ gemäß Tab. 1 liegen die betreffenden Gläser außerhalb des Bereiches, in dem gemäß dem Zustandsdiagramm $BaO$-$SiO_r TiO_2$ stabile Gläser zu erwarten sind. Nur durch eine Ersetzung Ti -> Zr, Ba -> La, und Si -> Al, B, also durch den Einsatz von solid solution, also Unordnung auch in der Kristallphase auf dem Ba und Ti Platz, konnte der Glasbildungsbereich entsprechend erweitert werden (Stabile Ausgangsgläser sind natürlich eine Grundvoraussetzung für reproduzierbare Glaskeramiken mit homogenen Eigenschaften).

Der Volumenanteil der kristallinen Phase bei den Beispielen 1 bis 7 gemäß Tab. 1 liegt in der Größenordnung von etwa 30 bis 60 Vol.-%.

An den Proben 1 bis 7 wurden relative Permittivitäten $\varepsilon_r$ gemessen, die sämtlich größer 15 waren und im Bereich von 20 bis 50 lagen.

Die Proben zeichnen sich ferner durch einen geringen dielektrischen Verlust bzw. durch eine hohe Güte aus.

Als Güte Q bezeichnet man den Kehrwert des dielektrischen Verlustes (tan $\delta$):

$$Q = 1/\tan(\delta).$$

Die Güte wird nach der Resonanzmethode nach Hakki-Coleman gemessen. Hierbei wird der Gütefaktor als Produkt aus Güte Q und Messfrequenz $f_0$ ermittelt. Die Messungen wurden bei etwa 7 bis 8 GHz durchgeführt.

Außer Beispiel 1 wiesen alle Beispiele einen Gütefaktor $Q f_0$ im Bereich von mehr als 1000 GHz auf. Für das Beispiel 5 wurde bei 7,547 GHz eine Güte Q von 418 gemessen, also ein Gütefaktor von 3155 GHz gemessen.

Der Betrag des Temperaturkoeffizienten $|\tau_f|$ der Resonanzfrequenz ist bei sämtlichen gemessenen Proben sehr niedrig.

Bei Anwendungen als Dielektrikum für Antennen, die insbesondere als mobile GPS-Antennen für Handys geeignet sind, liegt der Frequenzbereich oberhalb von 200 MHz, insbesondere im Bereich von etwa 800 MHz bis 70 GHz. Durch die dielektrische Aufladung der Antenne wird die Sensitivität der Antenne gegen Verstimmung durch den Benutzer reduziert.

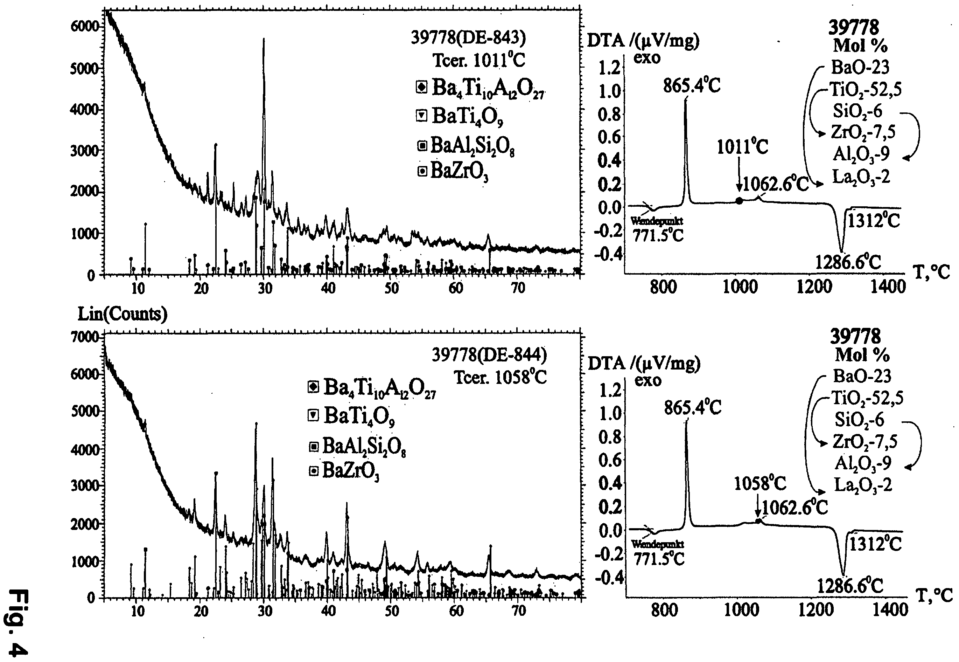

In Tab. 2 sind die Zusammensetzungen einer Reihe von weiteren erfindungsgemäßen Gläsern als Precurser-Gläser zusammengefasst Die zugehörigen Keramisierungsdaten finden sich in Tab. 2a bzw. 2b. Die Schmelze 39976 entspricht in der Zusammensetzung der Schmelze 39998. Es handelt sich jedoch um eine Schmelze im Litervolumen, mit der zusätzlich Keramisierungsversuche gemäß Tab. 2b. bei unterschiedlichen Temperaturen gefahren wurden. Bei den betreffenden Glaskeramiken wurde überwiegend die Mischkristallphase $Ba_4Al_2Ti_{10}O_{27}$ gebildet, vgl. die zugehörige Fig. 4 mit XRD (Röntgendiffraktometer) und DTA von einigen Proben aus Tab. 2a. Es zeigt sich, dass eine Keramisierung im konventionellen Ofen bei 1000 °C bis 1010 °C über 6 Stunden optimal ist, mit ähnlichen Ergebnissen bei 1058 °C über 15 Minuten.

In den Tab. 3 und 3a sind weitere Schmelzen und daraus hergestellte Glaskeramiken mit den zugehörigen Eigenschaften zusammengefasst.

Hierbei wurden den aus $BaO$, $TiO_2$, $ZrO_2$, $SiO_2$, $Al_2O_3$, $La_2O_3$ bestehenden Schmelzen geringe Zusätze zwischen 0,0125 Mol-% und 0,075 Mol-% von ZnO und $B_2O_3$ in einer eutektischen Zusammensetzung zugegeben. Wie sich aus Tab. 3a ergibt, führen bereits sehr kleine Zusätze von 0,0125 Mol-% zu hohen Gütefaktoren und sehr niedrigen dielektrischen Verlusten.

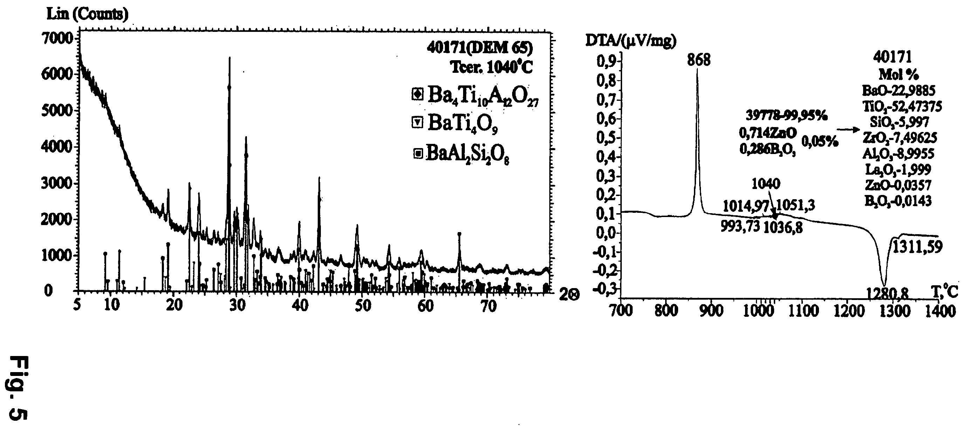

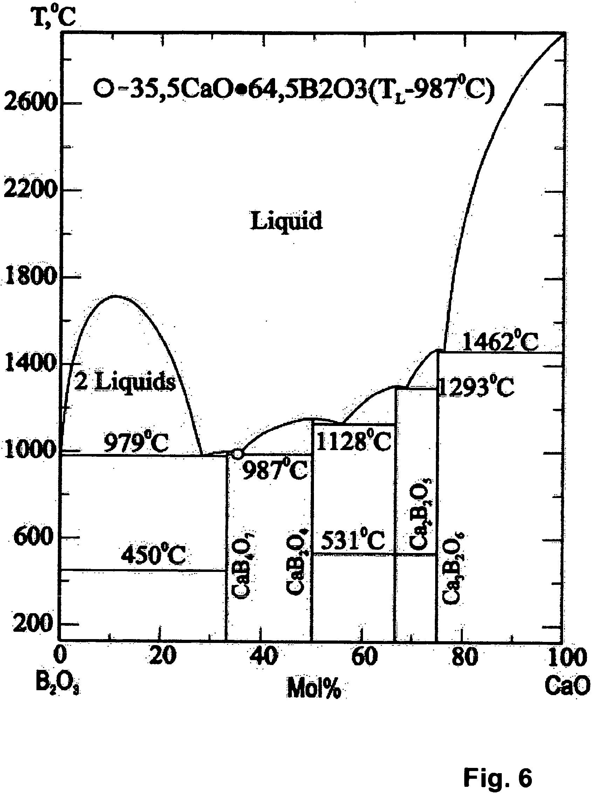

Weitere Precurser-Gläser, die mit kleinen Zusätzen (0,0125 - 0,075 Mol-%) von CaO und $B_2O_3$ in dem sehr niedrig schmelzenden eutektischen Zusammensetzung von 35,5 Mol-% CaO und 64,5 Mol-% $B_2O_3$ (vgl. Fig. 6) erschmolzen wurden, sind in Tab. 4 zusammengefasst. Die zugehörigen Keramisierungsbedingungen für die daraus hergestellten Glaskeramiken und die gemessenen Eigenschaften sind in Tab. 4a zusammengefasst Fig. 5 zeigt ein XRD und eine DTA der Probe 40171 (DEM-65). Der Peak in der DTA bei ca. 1280 °C zeigt die Bildung der Mischkristallphase $Ba_4Al_2Ti_{10}O_{27}$ an. Wie sich aus dem XRD ergibt, ist in der Glaskeramik überwiegend die Mischkristallphase $Ba_4Al_2Ti_{10}O_{27}$ enthalten.

Die betreffenden Precurser-Gläser sind stabil und lassen sich nach dem zuvor beschriebenen Prozedere bei niedriger Temperatur erschmelzen. Die hieraus hergestellten Glaskeramiken zeichnen sich durch besonders gute Eigenschaften aus. Die Rohstoffe zu deren Herstellung sind besonders günstig, so dass sie sich zur Massenproduktion eignen.

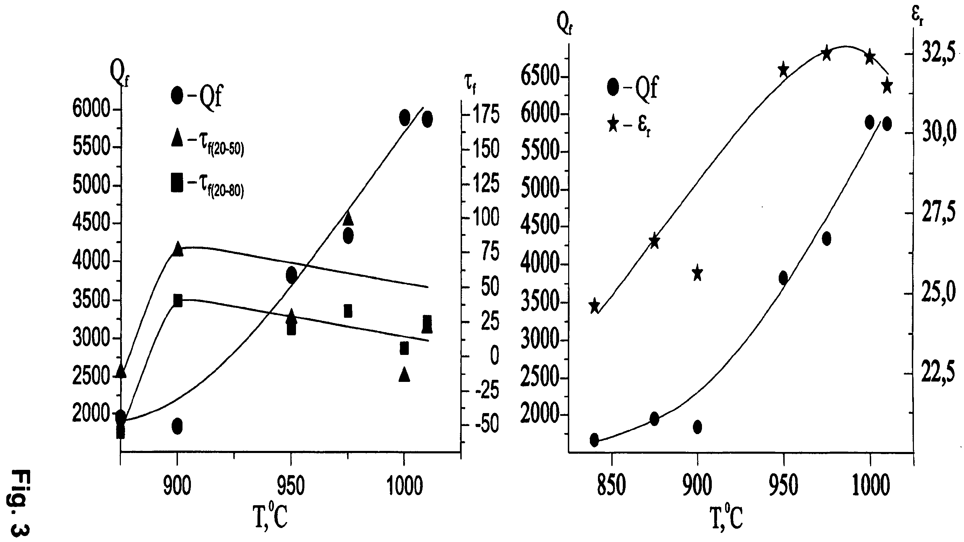

Eine Zusammenfassung der Eigenschaften der diversen Glaskeramiken gemäß der Tab. 2 bis 4, bei denen die überwiegende Mischkristallphase $Ba_4Al_2Ti_{10}O_{27}$ gebildet wird, ist in Fig. 3 enthalten. Die Gütefaktoren liegen im Bereich von etwa 1000 GHz bis etwa 6000 GHz, wobei sich je nach Keramisierungstemperatur Temperaturabhängigkeiten $|\tau_f|$ erzielen lassen, die kleiner als 100 ppm/K sind und durch optimierte Keramisierungsbedingungen auf nahe null eingestellt werden können (Keramisierungszeit 6 h). Die relativen Permittivitäten $\varepsilon_r$ liegen im Bereich von etwa 25 bis 33.

Tab. 1

| | Zusammensetzung / Mol-% | | | | | | | Eigenschaften | | | | | | |
|---|---|---|---|---|---|---|---|---|---|---|---|---|---|---|
| Nr. | BaO | TiO2 | zrO2 | SiO2 | Al2O3 | B2O3 | La2O3 | f/GHz | Q | Qf/GHz | d/mm | h/mm | Er | tan δ |
| 1 | 25 | 51 | 9 | 15 | | | | 8,212 | 93 | 764 | 9,86 | 5,11 | 25.52 | 0,0106 |
| **2** | **25** | **52,5** | **7,5** | **6** | **9** | | | **9,1257** | **213** | **1944** | **10.05** | **4,69** | **22,5** | **0.0045** |
| 3 | 23 | 52,5 | 7,5 | 6 | 9 | | 2 | 8,8686 | 182 | 1614 | 10,05 | 4,71 | 23,75 | 0,0053 |
| 4 | 25 | 52,5 | 7,5 | 5,5 | 7,5 | 2 | | 9,178 | 193 | 1771 | 10,03 | 4,63 | 22,64 | 0,005 |
| 6 | **16,5** | 60 | **7,5** | **4,5** | **8** | | **3,5** | **7,547** | **418** | **3155** | **10,04** | **4,82** | **31,9** | **0,0023** |
| 6 | 20,5 | 60 | 7,5 | 4 | 6 | | 2 | 7,952 | 223 | 1773 | 10,04 | 4,71 | 29,55 | 0,0043 |
| 7 | 20,5 | 57,5 | 7,5 | 6,25 | 6,25 | | 2 | 8,105 | 197 | 1597 | 10,04 | 4,72 | 28,35 | 0,0049 |

Tab. 2

| 39778 | Mol-% | | | Gew.- % |
|---|---|---|---|---|
| BaO | 23 | | BaO | 33,6359 |
| TiO2 | 52,5 | | TiO2 | 40,0488 |
| SiO2 | 6 | | Zr02 | 7,0515 |
| ZrO2 | 7,5 | | SiO2 | 4,2963 |
| Al2O3 | 9 | | Al2O3 | 8,7523 |
| La2O3 | 2 | | La2O3 | 6,2152 |
| | | | | 100 |
| **39779** | | | | |
| BaO | 22,5 | | BaO | 32,6363 |
| TiO2 | 52,5 | | TiO2 | 39,722 |
| SiO2 | 6 | | Zr02 | 6,994 |
| ZrO2 | 7,5 | | Si02 | 4,2613 |
| Al2O3 | 9 | | Al2O3 | 8,6808 |
| La2O3 | 2,5 | | La2O3 | 7,7056 |
| | | | | 100 |
| | | | | |
| **39780** | | | | |
| BaO | 23 | | BaO | 33,6617 |
| TiO2 | 52,5 | | TiO2 | 40,0795 |
| SiO2 | 5,85 | | ZrO2 | 6,8805 |

(fortgesetzt)

| 39778 | Mol-% | | | Gew.- % |
|---|---|---|---|---|
| ZrO2 | 7,5 | | SiO2 | 4,2996 |
| Al2O3 | 9 | | Al2O3 | 8,759 |
| La2O3 | 2 | | La2O3 | 6,22 |
| B2O3 | 0,15 | | B2O3 | 0,0997 |
| | | | | 100 |
| | | | | |
| 39781 | | | | |
| BaO | 23,5 | | BaO | 34,6522 |
| TiO2 | 52,5 | | TiO2 | 40,3809 |
| SiO2 | 6 | | ZrO2 | 7,11 |
| ZrO2 | 7,5 | | SiO2 | 4,3319 |
| Al2O3 | 9 | | Al2O3 | 8,8249 |
| La2O3 | 1,5 | | La2O3 | 4,7001 |
| | | | | 100 |

**Tab. 2a**

| Schm elz-Nr. | Keram. Nr. | Teer. /°C | Freq/ GHz | Q | Qf / GHz | d / mm | h / mm | $\varepsilon_r$ | tan $\delta$ |
|---|---|---|---|---|---|---|---|---|---|
| 39778 | Glas | | 10,08 | 200 | 2016 | 9,91 | 4,41 | 20,1 | 0,0048 |
| 39778 | 26 | 859-6h | 10,32 | 160 | 1651,2 | 10,1 4 | 3,64 | 24,1 | 0,0059 |
| 39778 | 843 | 1011-6h | 7,61 | 297 | 2260,17 | 9,99 | 4,81 | 31.6 | 0,0032 |
| 39778 | 844 | 1058-6h | 7,447 | 689 | 5130,98 | 10 | 4,82 | 32.9 | 0,0013 |
| | | | | | | | | | |
| 39779 | Glas | | 10,05 | 189 | 1899,45 | 9,89 | 4,42 | 20,2 | 0,005 |
| 39779 | 27 | 865-6h | 9,859 | 209 | 2060,53 | 10,2 4 | 3,64 | 26,9 | 0,0049 |
| 39779 | 30 | 1006-6h | 7,367 | 1151 | 8479,42 | 10,1 7 | 4,81 | 33,28 | |
| 39779 | 845 | 1006-15min | 7,553 | 305 | 2303,67 | 9,99 | 4,82 | 32 | 0,0032 |
| 39779 | 846 | 1053-15min | 7,23 | 509 | 3680,07 | 9,95 | 4,82 | 34.1 | 0,0019 |
| | | | | | | | | | |
| 39780 | Glas | | 10,11 | 202 | 2042,22 | 9,89 | 4,42 | 19,95 | 0,0047 |
| 39780 | 847 | 985 | 8,186 | 161 | 1317,94 6 | 10 | 4,83 | 27,1 | 0,0061 |
| 39780 | 891 | 1031 | 7,549 | 405 | 3057,34 5 | 10,2 8 | 4,68 | 32,9 | 0,0023 |
| 39780 | 31 | 1033 | 7,406 | 857 | 6346,94 | 10,1 9 | 4,82 | 32,8 | |
| 39781 | Glas | | 10,15 | 191 | 1938,65 | 9,9 | 4,42 | 19,75 | 0,005 |

**Tab. 2b**

| Schmelz-Nr. | Keram. Nr. | Tcryst / °C | Freq./ GHz | Q | Qf / GHz | d / mm | h / mm | $\varepsilon_r$ | tan $\delta$ |
|---|---|---|---|---|---|---|---|---|---|
| 39976 | Glas | | 9,207 | 199 | 1832,193 | 10,36 | 5,03 | 19,82 | 0,0048 |

(fortgesetzt)

| Schmelz-Nr. | Keram. Nr. | Tcryst / °C | Freq./ GHz | Q | Qf / GHz | d / mm | h / mm | $\varepsilon_r$ | tan $\delta$ |
|---|---|---|---|---|---|---|---|---|---|
| 39976 | DEM-40 | 840-6h | 8,62 | 193 | 1663,66 | 10,4 | 4,68 | 24,6 | 0,005 |
| 39976 | DEM-68 | 875-6h | 8,048 | 242 | 1947,616 | 10,36 | 4,94 | 26,6 | 0,004 |
| 39976 | DEM-69 | 900-6h | 8.086 | 227 | 1835,552 | 10,36 | 5,05 | 25,62 | 0,0043 |
| 39976 | DEM-50 | 950-6h | 7,354 | 520 | 3824,08 | 10,25 | 4,95 | 32 | 0,0018 |
| 39976 | DEM-51 | 975-6h | 7,289 | 595 | 4336,955 | 10,25 | 4,96 | 32,52 | 0,0016 |
| 39976 | DEM-52 | 1000-6h | 7,305 | 807 | 5895,135 | 10,27 | 4,95 | 32,4 | 0,0011 |
| 39976 | DEM-41 | 1010-6h | 7,307 | 804 | 5874,82 | 10,31 | 5,05 | 31,5 | 0,0011 |
| 39976 | DE-893 | 1058-15min | 7,781 | 525 | 4084,5 | 10,33 | 4,68 | 30,4 | 0,0018 |
| | | | | | | | | | |
| 39778 | DEM-26 | 859-6h | 10,32 | 160 | 1651,2 | 10,14 | 3,64 | 24,1 | 0,0059 |
| 39778 | DE-843 | 1011-15min | 7,61 | 297 | 2260,17 | 9.99 | 4,81 | 31.6 | 0,0032 |
| 39778 | DE-844 | 1058-15min | 7,447 | 689 | 5130,98 | 10 | 4,82 | 32.9 | 0,0013 |

**Tab. 3**

| 40169 Mol-% | | | | Mol-% | | Gew.-% | |
|---|---|---|---|---|---|---|---|
| BaO | 23 | | 22,99713 | BaO | 22,99713 | BaO | 33,33165 |
| TiO2 | 52,5 | | 52,49344 | TiO2 | 52,49344 | TiO2 | 39,68647 |
| ZrO2 | 7,5 | | 7,499063 | ZrO2 | 7,499063 | ZrO2 | 8,734625 |
| SiO2 | 6 | | 5,99925 | SiO2 | 5,99925 | SiO2 | 3,405951 |
| Al2O3 | 9 | | 8,998875 | Al2O3 | 8,998875 | Al203 | 8,673096 |
| La2O3 | 2 | 99,9875 | 1,99975 | La2O3 | 1,99975 | La2O3 | 6,15899 |
| | | | | ZnO | 0,008925 | ZnO | 0,006866 |
| | | | | B2O3 | 0,003575 | B2O3 | 0,002353 |
| ZnO | 71,4 | | 0,008925 | | | | 100 |
| B2O3 | 28,6 | 0,0125 | 0,003575 | | | | |
| 40170 | | | | | | | |
| BaO | 23 | | 22,99425 | BaO | 22,99425 | BaO | 33,32857 |
| TiO2 | 52,5 | | 52,48688 | TiO2 | 52,48688 | TiO2 | 39,68281 |
| ZrO2 | 7,5 | | 7,498125 | ZrO2 | 7,498125 | ZrO2 | 8,73382 |
| SiO2 | 6 | | 5,9985 | Si02 | 5,9985 | SiO2 | 3,405637 |
| Al2O3 | 9 | | 8,99775 | Al2O3 | 8,99775 | Al2O3 | 8,672296 |
| La2O3 | 2 | 99,975 | 1,9995 | La2O3 | 1,9995 | La2O3 | 6,158423 |
| | | | | ZnO | 0,01785 | ZnO | 0,013733 |
| | | | | B2O3 | 0,00715 | B2O3 | 0,004706 |
| ZnO | 71,4 | | 0,01785 | | | | 100 |
| 8203 | 28,6 | 0,025 | 0,00715 | | | | |
| 40171 | | | | | | | |

(fortgesetzt)

| 40169 Mol-% | | | | Mol-% | | Gew.-% | |
|---|---|---|---|---|---|---|---|
| BaO | 23 | | 22,9885 | BaO | 22,9885 | BaO | 33,32243 |
| TiO2 | 52,5 | | 52,47375 | TiO2 | 52,47375 | TiO2 | 39,67549 |
| ZrO2 | 7,5 | | 7,49625 | ZrO2 | 7,49625 | ZrO2 | 8,732209 |
| SiO2 | 6 | | 5,997 | SiO2 | 5,997 | SiO2 | 3,405009 |
| Al2O3 | 9 | | 8,9955 | Al2O3 | 8,9955 | Al2O3 | 8,670696 |
| La2O3 | 2 | 99,95 | 1,999 | La2O3 | 1,999 | La2O3 | 6,157287 |
| | | | | ZnO | 0,0357 | ZnO | 0,027469 |
| | | | | B2O3 | 0,0143 | B2O3 | 0,009412 |
| ZnO | 71,4 | | 0,0357 | | | | 100 |
| B2O3 | 28,6 | 0,05 | 0,0143 | | | | |
| | | | | | | | |
| 40172 | | | | | | | |
| BaO | 23 | | 22,98275 | BaO | 22,98275 | BaO | 33,31628 |
| TiO2 | 52,5 | | 52,46063 | TiO2 | 52,46063 | TiO2 | 39,66817 |
| ZrO2 | 7,5 | | 7,494375 | ZrO2 | 7,494375 | ZrO2 | 8,730597 |
| SiO2 | 6 | | 5,9955 | SiO2 | 5,9955 | SiO2 | 3,40438 |
| Al2O3 | 9 | | 8,99325 | Al2O3 | 8,99325 | Al2O3 | 8,669096 |
| La2O3 | 2 | 99,925 | 1,9985 | La2O3 | 1,9985 | La2O3 | 6,156151 |
| | | | | ZnO | 0,05355 | ZnO | 0,041206 |
| | | | | B2O3 | 0,02145 | B203 | 0,014119 |
| ZnO | 71,4 | | 0,05355 | | | | 100 |
| B2O3 | 28,6 | 0,075 | 0,02145 | | | | |

Tab. 3a

| Schmelz-Nr. | Keram.-Nr. | Tcryst. / °C | Freq. / GHz | Q | Qf / GHz | d / mm | h / mm | $\varepsilon_r$ | tan $\delta$ |
|---|---|---|---|---|---|---|---|---|---|
| (39778-99,925)·((0,714ZnO·0,286B2O3)-0.075) | | | | | | | | | |
| **40172** | DEM-64 | 1040 | 7,4102 | 1238,17 | 9175,087 | 10,27 | 4,73 | 33,27 | 6,88*10-4 |
| (39778-99,95)·((0714ZnO·0,286B2O3)-0,05) | | | | | | | | | |
| **40171** | DEM-65 | 1040 | 7,4239 | 1196,04 | 8879,281 | 10,26 | 4,73 | 33,18 | **7,17*10-4** |
| (39778-99,975)·(0,714ZnO·0.286B2O3)-0,025) | | | | | | | | | |
| **40170** | DEM-66 | 1041 | 7,3872 | 1206,91 | 8915,686 | 10,24 | 4,72 | 33,64 | **7,15*10-4** |
| (39778-99,9875)·(0,714ZnO·0,286B203)-0,0125) | | | | | | | | | |
| **40169** | DEM-67 | 1041 | 7,3839 | 1233.6 | 9108,7791 | 10,33 | 4,73 | 33,36 | 6,78*10-4 |
| Keramisierungsdauer: 6 h | | | | | | | | | |

Tab. 4

| 40173 | | Mol-% | Mol.% | | | | Gew.- % |
|---|---|---|---|---|---|---|---|
| BaO | 23 | | 22,99713 | BaO | 22,99713 | BaO | 33,33217 |
| TiO2 | 52,5 | | 52,49344 | TiO2 | 52,49344 | TiO2 | 39,68709 |
| ZrO2 | 7,5 | | 7,499063 | ZrO2 | 7,499063 | ZrO2 | 8,734761 |
| Si02 | 6 | | 5,99925 | SiO2 | 5,99925 | SiO2 | 3,406004 |
| Al2O3 | 9 | | 8,998875 | Al2O3 | 8,998875 | Al2O3 | 8,673231 |
| La2O3 | 2 | 99,9875 | 1,99975 | La2O3 | 1,99975 | La2O3 | 6,159087 |
| | | | | B2O3 | 0,008063 | B2O3 | 0,005306 |
| | | | | CaO | 0,004438 | CaO | 0,002352 |
| CaO | 35,5 | | 0,004438 | | | | 100 |
| B2O3 | 64,5 | 0,0125 | 0,008063 | | | | |
| **40174** | | | | | | | |
| BaO | 23 | | 22,99425 | BaO | 22,99425 | BaO | 33,32961 |
| TiO2 | 52,5 | | 52,48688 | TiO2 | 52,48688 | TiO2 | 39,68405 |
| ZrO2 | 7,5 | | 7,498125 | ZrO2 | 7,498125 | ZrO2 | 8,734092 |
| SiO2 | 6 | | 5,9985 | SiO2 | 5,9985 | SiO2 | 3,405743 |
| Al2O3 | 9 | | 8,99775 | Al2O3 | 8,99775 | Al2O3 | 8,672567 |
| La203 | 2 | 99,975 | 1,9995 | La2O3 | 1,9995 | La2O3 | 6,158615 |
| | | | | B2O3 | 0,016125 | B2O3 | 0,010613 |
| | | | | CaO | 0,008875 | CaO | 0,004705 |
| CaO | 35,5 | | 0,008875 | | | | 100 |
| B2O3 | 64,5 | 0,025 | 0,016125 | | | | |
| **40175** | | | | | | | |
| BaO | 23 | | 22,9885 | BaO | 22,9885 | BaO | 33,32451 |
| TiO2 | 52,5 | | 52,47375 | TiO2 | 52,47375 | TiO2 | 39,67797 |
| ZrO2 | 7,5 | | 7,49625 | ZrO2 | 7,49625 | ZrO2 | 8,732754 |
| SiO2 | 6 | | 5,997 | SiO2 | 5,997 | SiO2 | 3,405221 |
| Al2O3 | 9 | | 8,9955 | Al2O3 | 8,9955 | Al2O3 | 8,671238 |
| La2O3 | 2 | 99,95 | 1,999 | La2O3 | 1,999 | La2O3 | 6,157671 |
| | | | | B2O3 | 0,03225 | B2O3 | 0,021228 |
| | | | | CaO | 0,01775 | CaO | 0,009411 |
| CaO | 35,5 | | 0,01775 | | | | 100 |
| B2O3 | 64,5 | 0,05 | 0,03225 | | | | |
| **40176** | | | | | | | |
| BaO | 23 | | 22,98275 | BaO | 22,98275 | BaO | 33,3194 |
| TiO2 | 52,5 | | 52,46063 | TiO2 | 52,46063 | TiO2 | 39,67189 |
| ZrO2 | 7,5 | | 7,494375 | ZrO2 | 7,494375 | ZrO2 | 8,731415 |
| SiO2 | 6 | 99,925 | 5,9955 | SiO2 | 5,9955 | SiO2 | 3,404699 |

(fortgesetzt)

| 40173 | | Mol-% | Mol.% | | | | | Gew.- % |
|---|---|---|---|---|---|---|---|---|
| Al2O3 | 9 | | 8,99325 | Al2O3 | 8,99325 | Al2O3 | | 8,669909 |
| La2O3 | 2 | | 1,9985 | La2O3 | 1,9985 | La2O3 | | 6,156727 |
| | | | | B2O3 | 0,048375 | B2O3 | | 0,031845 |
| | | | | CaO | 0,026625 | CaO | | 0,014118 |
| CaO | 35,5 | | 0,026625 | | | | | 100 |
| B2O3 | 64,5 | 0,075 | 0,048375 | | | | | |

### Tab. 4a

| Schmelz-Nr. | Keram.-Nr. | Tcryst. /°C | Freq./ GHz | Q | Qf/GHz | d/ mm | h/ mm | $\varepsilon_\tau$ | tan $\delta$ |
|---|---|---|---|---|---|---|---|---|---|
| (39778-99,9875) • ((0,355CaO •0,645B2O3)-0,075) / Mol-% | | | | | | | | | |
| 40176 | DEM-70 | 864 | 8,155 | 195 | 1590,22 | 10,28 | 4,97 | 25,8 | 0,005 |
| 40176 | DEM-74 | 950 | 7,831 | 282 | 2208,34 | 10,36 | 5,05 | 27,31 | 0,0034 |
| 40176 | DEM-73 | 975 | 7,016 | 402 | 2820,43 | 10,36 | 5,07 | 33,9 | 0,0024 |
| 40176 | DEM-72 | 1000 | 6,965 | 647 | 4506,355 | 10,37 | 5,07 | 34,37 | 0,0015 |
| 40176 | DEM-60 | 1041 | 7,419 | 1223 | 9073,437 | 10,27 | 4,74 | 33,11 | $6,97*10^{-4}$ |
| (39778-99,95) • ((0,355CaO • 0,645B2O3)-0,05) / Mol-% | | | | | | | | | |
| 40175 | Glas | | 9,243 | 181 | 1672,983 | 10,36 | 5,03 | 19,66 | 0,0053 |
| 40175 | DEM-61 | 1039 | 7,425 | 1196,62 | 8884,904 | 10,27 | 4,72 | 33,22 | $6,14*10^{-4}$ |
| (39778-99,975) • ((0,355CaO • 0,645B2O3)-0,025) / Mol-% | | | | | | | | | |
| 40174 | DEM-80 | 863 | 8,146 | 205 | 1669,93 | 10,35 | 5,07 | 25,1 | 0,0047 |
| 40174 | DEM-79 | 950 | 7,785 | 292 | 2273,22 | 10,36 | 5,07 | 27,52 | 0,0033 |
| 40174 | DEM-78 | 975 | 7,109 | 418 | 2971,562 | 10,35 | 5,06 | 33,13 | 0,0023 |
| 40174 | DEM-77 | 1000 | 6,984 | 667 | 4658,328 | 10,35 | 5,07 | 34,25 | 0,001 |
| 40174 | DEM-62 | 1041 | 7,408 | 1154,11 | 8549,647 | 10,29 | 4,74 | 33,15 | $7,47*10^{-4}$ |
| (39778-99,9875) • ((0,355CaO • 0,645B2O3)-0,0125) / Mol-% | | | | | | | | | |
| 40173 | Glas | | 9,218 | 185 | 1705,33 | 10,36 | 5,03 | 19,77 | 0,0052 |
| 40173 | DEM-63 | 1044 | 7,416 | 1192,11 | 8840,688 | 10,3 | 4,73 | 33,14 | $7,15*10^{-4}$ |
| Keramisierungsdauer 6 h | | | | | | | | | |

**Patentansprüche**

1. Glaskeramik, die mindestens die folgenden Bestandteile (in Mol-% auf Oxidbasis) aufweist:

| | |
|---|---|
| $SiO_2$ | 4 - 8 |
| $Al_2O_3$ | 7 - 11 |
| $B_2O_3$ | 0 - 1 |
| $TiO_2$ | 45 - 55 |
| $ZrO_2$ | 5 - 10 |
| $RE_2O_3$ | 0,1 - <5 |
| BaO | 15 - 30 |

$$10 \leq SiO_2 + Al_2O_3 + B_2O_3 \leq 20$$

wobei RE Lanthan oder ein anderes Lanthanoid ist, und wobei Ti teilweise, vorzugsweise bis zu 10 % des obligatorischen Anteils, durch Hf, Nb, V, Ta ersetzt sein kann.

2. Glaskeramik nach Anspruch 1, die mindestens die folgenden Bestandteile (in Mol- % auf Oxidbasis) aufweist:

| | |
|---|---|
| $SiO_2$ | 4,5 - 7 |
| $Al_2O_3$ | 8 - 10 |
| $B_2O_3$ | 0 - 0,5 |
| $TiO_2$ | 48 - 55 |
| $ZrO_2$ | 6 - 9 |
| $RE_2O_3$ | 0,1 - <5 |
| BaO | 20 - 26 |

wobei RE Lanthan oder ein anderes Lanthanoid ist, und wobei Ti teilweise, vorzugsweise bis zu 10 % des obligatorischen Anteils, durch Hf, Nb, V, Ta ersetzt sein kann.

3. Glaskeramik nach einem der vorhergehenden Ansprüche, bei der der Gehalt an $RE_2O_3$ 0,1 bis 4,9 Mol-%, weiter bevorzugt 0,5 bis 4,5 Mol-%, weiter bevorzugt 0,5 bis 4 Mol-%, besonders bevorzugt 1 bis 3,5 Mol-%, beträgt, wobei RE vorzugsweise nur Lanthan oder ein anderes Lanthanoid ist.

4. Glaskeramik nach einem der vorhergehenden Ansprüche, die mindestens 0,005 Mol-% eines Schmelzzusatzes in Form eines niedrig schmelzenden Eutektikums aus glasbildenden Komponenten, vorzugsweise des Systems CaO-$B_2O_3$, oder des Systems ZnO- $B_2O_3$ aufweist, vorzugsweise mindestens 0,01 Mol-%, vorzugsweise bis zu 1 Mol-%, weiter bevorzugt bis zu 0,5 Mol.%, weiter bevorzugt bis zu 0,1 Mol-%, besonders bevorzugt bis zu 0,05 Mol-%.

5. Glaskeramik nach einem der vorhergehenden Ansprüche, die 0,01 bis zu 3 Mol-% mindestens eines Läutermittels enthält, das vorzugsweise aus der Gruppe ausgewählt ist, die aus $As_2O_3$ und $Sb_2O_3$ besteht.

6. Glaskeramik nach einem der vorhergehenden Ansprüche, die einen dielektrischen Verlust (tan S) von höchstens $10^{-2}$, vorzugsweise von höchstens $10^{-3}$, im Hochfrequenzbereich (Frequenz f > 200 MHz), bevorzugt auch im Frequenzbereich von bis zu 2000 GHz, weiter bevorzugt bis zum Frequenzbereich von bis zu 5000 GHz aufweist.

7. Glaskeramik nach einem der vorhergehenden Ansprüche, mit einer relativen Permittivität $\varepsilon$ von mindestens 15, vorzugsweise > 18, vorzugsweise im Bereich von 20 bis 80, weiter bevorzugt im Bereich von 20 bis 50.

8. Glaskeramik nach einem der vorhergehenden Ansprüche, bei der der Betrag der Temperaturabhängigkeit der Resonanzfrequenz $|\tau_f|$ höchstens 200 ppm/K, vorzugsweise höchstens 50 ppm/K, weiter bevorzugt höchstens 20 ppm/K, besonders bevorzugt höchstens 10 ppm/K ist.

9. Glaskeramik nach einem der vorhergehenden Ansprüche, die mindestens eine Mischkristallphase auf der Basis von Ba, Ti, O und ggf. RE, Si, enthält, wobei Ba zumindest teilweise durch Sr, Ca, Mg ersetzt sein kann, wobei RE ein Lanthanoid oder Yttrium ist und wobei Ti zumindest teilweise durch Zr, Hf, Nb, V, Ta ersetzt sein kann.

10. Glaskeramik nach einem der vorhergehenden Ansprüche, die mindestens eine Mischkristallphase auf der Basis von Ba, Ti, Al, O und ggf. RE, Si, enthält, wobei Ba zumindest teilweise durch Sr, Ca, Mg ersetzt sein kann, wobei RE ein Lanthanoid oder Yttrium ist und wobei Ti zumindest teilweise, vorzugsweise bis zu 10% des obligatorischen Anteils, durch Zr, Hf, Nb, V, Ta ersetzt sein kann.

11. Glaskeramik nach einem der vorhergehenden Ansprüche, die mindestens eine Mischkristallphase enthält, die aus der Gruppe ausgewählt ist, die durch $(BaO)_x(RE_2O_3)_y(SiO_2)_z(TiO_2)_u$ gebildet ist, wobei RE Lanthan, ein anderes Lanthanoid oder Yttrium ist, wobei bis zu 10 % von Ba durch Sr, Ca, Mg ersetzt sein können, und wobei bis zu 10 % des obligatorischen Anteils von Ti durch Zr, Hf, Nb, V, Ta ersetzt sein können.

12. Glaskeramik nach einem der vorhergehenden Ansprüche, die als überwiegende Mischkristallphase $BaTi_4O_9$ enthält, wobei Ba teilweise durch La, Ca oder Sr ersetzt sein kann und wobei Ti teilweise durch Zr, Hf, Y, Nb, V, Ta ersetzt sein kann.

13. Glaskeramik nach einem der Ansprüche 1 bis 11, die als überwiegend Mischkristallphase $(BaO)_x(RE_2O_3)_y(Al_2O_3)_z(TiO_2)_u$ enthält, insbesondere $Ba_4Al_2Ti_{10}O_{27}$ enthält, wobei Ba teilweise durch La, Ca oder Sr ersetzt sein kann und wobei Ti teilweise durch Zr, Hf, Y, Nb, V, Ta ersetzt sein kann.

14. Dielektrischer Resonator, elektronisches Frequenzfilterelement oder Antennenelement für den Hochfrequenzbereich, mit einem Dielektrikum aus einer Glaskeramik nach einem der vorhergehenden Ansprüche.

**Claims**

1. A glass-ceramic comprising at least the following constituents (in mol-% on oxide basis):

| | |
|---|---|
| $SiO_2$ | 4 - 8 |
| $Al_2O_3$ | 7 - 11 |
| $B_2O_3$ | 0 - 1 |
| $TiO_2$ | 45 - 55 |
| $ZrO_2$ | 5 - 10 |
| $RE_2O_3$ | 0.1 - <5 |
| $BaO$ | 15 - 30 |

$$10 \leq SiO_2+Al_2O_3+B_2O_3 \leq 20,$$

where RE is lanthanum, or another lanthanoid, and where Ti may be replaced in part, preferably up to 10% of the obligatory fraction, by Hf, Nb, V, Ta.

2. The glass-ceramic of claim 1, comprising at least the following constituents (in mol-% on oxide basis):

| | |
|---|---|
| $SiO_2$ | 4.5 - 7 |
| $Al_2O_3$ | 8 - 10 |
| $B_2O_3$ | 0 - 0.5 |
| $TiO_2$ | 48 - 55 |
| $ZrO_2$ | 6 - 9 |
| $RE_2O_3$ | 0.1 - <5 |
| $BaO$ | 20 - 26 |

where RE is lanthanum or another lanthanoid, and where Ti may be replaced in part, preferably up to 10% of the obligatory fraction, by Hf, Nb, V, Ta.

3. The glass-ceramic of any of the preceding claims, wherein the $RE_2O_3$ content is 0.1 to 4.9 mol-%, more preferably 0.5 to 4.5 mol-%, more preferably 0.5 to 4 mol-%, very preferably 1 to 3.5 mol-%, with RE being preferably only lanthanum or another lanthanoid.

4. The glass-ceramic of any of the preceding claims, comprising at least 0.005, preferably at least 0.01 mol-% of a melting additive being configured as a low-melting additive of a eutectic composed of glass-forming components, preferably of the $CaO$-$B_2O_3$ system, or of the $ZnO$-$B_2O_3$ system, preferably up to 1 mol-%, more preferably up to 0.5 mol-%, more preferably up to 0.1 mol-%, very preferably up to 0.05 mol-%.

5. The glass-ceramic of any of the preceding claims, comprising 0.01 up to 3 mol-% of at least one refining agent selected preferably from the group consisting of $As_2O_3$ and $Sb_2O_3$.

**EP 2 782 882 B1**

6. The glass-ceramic of any of the preceding claims, comprising a dielectric loss (tan $\delta$) of not more than $10^{-2}$, preferably of not more than $10^{-3}$, in the high-frequency range (frequency f > 200 MHz), preferably also in the frequency range of up to 2000 GHz, more preferably up to the frequency range of up to 5000 GHz.

7. The glass-ceramic of any of the preceding claims, having a relative permittivity $\varepsilon$ of at least 15, preferably > 18, preferably in the range from 20 to 80, more preferably in the range from 20 to 50.

8. The glass-ceramic of any of the preceding claims, wherein the absolute value of the temperature dependence of the resonance frequency $|\tau_f|$ is not more than 200 ppm/K, preferably not more than 50 ppm/K, more preferably not more than 20 ppm/K, very preferably not more than 10 ppm/K.

9. The glass-ceramic of any of the preceding claims, comprising at least one solid solution phase based on Ba, Ti, O, and optionally RE, Si, where Ba may be replaced at least in part by Sr, Ca, Mg, where RE is a lanthanoid or yttrium, and where Ti may be replaced at least in part by Zr, Hf, Nb, V, Ta.

10. The glass-ceramic of any of the preceding claims, comprising at least one solid solution phase based on Ba, Ti, Al, O, and optionally RE, Si, where Ba may be replaced at least in part by Sr, Ca, Mg, where RE is a lanthanoid or yttrium, and where Ti may be replaced at least in part, preferably up to 10% of the obligatory fraction, by Zr, Hf, Nb, V, Ta.

11. The glass-ceramic of any of the preceding claims, comprising at least one solid solution phase selected from the group formed by $(BaO)_x(RE_2O_3)_y(SiO_2)_z(TiO_2)_u$, where RE is lanthanum, another lanthanoid, or yttrium, where up to 10% of Ba may be replaced by Sr, Ca, Mg, and where up to 10% of the obligatory fraction of Ti may be replaced by Zr, Hf, Nb, V, Ta.

12. The glass-ceramic of any of the preceding claims, comprising as predominant solid solution phase $BaTi_4O_9$, where Ba may be replaced in part by La, Ca, or Sr, and where Ti may be replaced in part by Zr, Hf, Y, Nb, V, Ta.

13. The glass-ceramic of any of claims 1 to 11, comprising as predominant solid solution phase $(BaO)_x(RE_2O_3)_y(Al_2O_3)_z(TiO_2)_u$, more particularly $Ba_4Al_2Ti_{10}O_{27}$, where Ba may be replaced in part by La, Ca, or Sr, and where Ti may be replaced in part by Zr, Hf, Y, Nb, V, Ta.

14. A dielectric resonator, electronic frequency filter element, or antenna element for the high-frequency range, having a dielectric comprising a glass-ceramic of any of the preceding claims.

**Revendications**

1. Vitrocéramique, qui comprend au moins les constituants suivants (en % en moles, par rapport aux oxydes) :

$SiO_2$ 4 à 8
$Al_2O_3$ 7 à 11
$B_2O_3$ 0 à 1
$TiO_2$ 45 à 55
$ZrO_2$ 5 à 10
$RE_2O_3$ 0,1 à < 5
BaO 15 à 30

$$10 \leq SiO_2 + Al_2O_3 + B_2O_3 \leq 20$$

RE étant le lanthane ou un autre lanthanide, et Ti pouvant être remplacé en partie, de préférence à hauteur de jusqu'à 10 % de la proportion obligatoire, par Hf, Nb, V, Ta.

2. Vitrocéramique selon la revendication 1, qui comprend au moins les constituants suivants (en % en moles, par rapport aux oxydes) :

SiO$_2$ 4,5 à 7
Al$_2$O$_3$ 8 à 10
B$_2$O$_3$ 0 à 0,5
TiO$_2$ 48 à 55
ZrO$_2$ 6 à 9
RE$_2$O$_3$ 0,1 à < 5
BaO 20 à 26

RE étant le lanthane ou un autre lanthanide, et Ti pouvant être remplacé en partie, de préférence à hauteur de jusqu'à 10 % de la proportion obligatoire, par Hf, Nb, V, Ta.

3. Vitrocéramique selon l'une quelconque des revendications précédentes, dans laquelle la teneur en RE$_2$O$_3$ est de 0,1 à 4,9 % en moles, de manière davantage préférée de 0,5 à 4,5 % en moles, de manière davantage préférée de 0,5 à 4 % en moles, de manière particulièrement préférée de 1 à 3,5 % en moles, RE étant de préférence uniquement le lanthane ou un autre lanthanide.

4. Vitrocéramique selon l'une quelconque des revendications précédentes, qui comprend au moins 0,005 % en moles d'un fondant sous la forme d'un eutectique de composants vitrifiants de faible point de fusion, de préférence du système CaO-B$_2$O$_3$ ou du système ZnO-B$_2$O$_3$, de préférence au moins 0,01 % en moles, de préférence jusqu'à 1 % en moles, de manière davantage préférée jusqu'à 0,5 % en moles, de manière davantage préférée jusqu'à 0,1 % en moles, de manière particulièrement préférée jusqu'à 0,05 % en moles.

5. Vitrocéramique selon l'une quelconque des revendications précédentes, qui contient 0,01 à 3 % en moles d'au moins un agent d'affinage, qui est de préférence choisi dans le groupe constitué par As$_2$O$_3$ et Sb$_2$O$_3$.

6. Vitrocéramique selon l'une quelconque des revendications précédentes, qui présente une perte diélectrique (tan $\delta$) d'au plus 10$^{-2}$, de préférence d'au plus 10$^{-3}$, dans la plage haute fréquence (fréquence f > 200 MHz), de préférence également dans la plage de fréquence allant jusqu'à 2 000 GHz, de manière davantage préférée jusqu'à la plage de fréquence allant jusqu'à 5 000 GHz.

7. Vitrocéramique selon l'une quelconque des revendications précédentes, présentant une permittivité relative $\varepsilon$ d'au moins 15, de préférence > 18, de préférence dans la plage allant de 20 à 80, de manière davantage préférée dans la plage allant de 20 à 50.

8. Vitrocéramique selon l'une quelconque des revendications précédentes, dans laquelle le montant de la dépendance à la température de la fréquence de résonance $|\tau_f|$ est d'au plus 200 ppm/K, de préférence d'au plus 50 ppm/K, de manière davantage préférée d'au plus 20 ppm/K, de manière particulièrement préférée d'au plus 10 ppm/K.

9. Vitrocéramique selon l'une quelconque des revendications précédentes, qui contient au moins une phase cristalline mixte à base de Ba, Ti, O et éventuellement RE, Si ; Ba pouvant être remplacé au moins en partie par Sr, Ca, Mg ; RE étant un lanthanide ou l'yttrium ; et Ti pouvant être remplacé au moins en partie par Zr, Hf, Nb, V, Ta.

10. Vitrocéramique selon l'une quelconque des revendications précédentes, qui contient au moins une phase cristalline mixte à base de Ba, Ti, Al, O et éventuellement RE, Si ; Ba pouvant être remplacé au moins en partie par Sr, Ca, Mg ; RE étant un lanthanide ou l'yttrium ; et Ti pouvant être remplacé au moins en partie, de préférence à hauteur de jusqu'à 10 % de la proportion obligatoire, par Zr, Hf, Nb, V, Ta.

11. Vitrocéramique selon l'une quelconque des revendications précédentes, qui contient au moins une phase cristalline mixte, qui est choisie dans le groupe formé par (BaO)$_x$(RE$_2$O$_3$)$_y$(SiO$_2$)$_z$(TiO$_2$)$_u$ ; RE étant le lanthane, un autre lanthanide ou l'yttrium ; jusqu'à 10 % de Ba pouvant être remplacé par Sr, Ca, Mg ; et jusqu'à 10 % de la proportion obligatoire de Ti pouvant être remplacé par Zr, Hf, Nb, V, Ta.

12. Vitrocéramique selon l'une quelconque des revendications précédentes, qui contient en tant que phase cristalline mixte principale BaTi$_4$O$_9$, Ba pouvant être remplacé en partie par La, Ca ou Sr ; et Ti pouvant être remplacé en partie par Zr, Hf, Y, Nb, V, Ta.

13. Vitrocéramique selon l'une quelconque des revendications 1 à 11, qui contient en tant que phase cristalline mixte principale (BaO)$_x$(RE$_2$O$_3$)$_y$(Al$_2$O$_3$)$_z$(TiO$_2$)$_u$, notamment Ba$_4$Al$_2$Ti$_{10}$O$_{27}$, Ba pouvant être remplacé par La, Ca ou Sr ;

et Ti pouvant être remplacé en partie par Zr, Hf, Y, Nb, V, Ta.

14. Résonateur diélectrique, élément de filtration de fréquence électronique ou élément d'antenne pour la plage haute fréquence, comprenant un diélectrique en une vitrocéramique selon l'une quelconque des revendications précédentes.

Fig. 1

Fig. 2

EP 2 782 882 B1

**Fig. 3**

**39778(DE-843)**
Tcer. 1011°C

⊡ $Ba_4Ti_{10}Al_2O_{27}$

▽ $BaTi_4O_9$

▣ $BaAl_2Si_2O_8$

⊡ $BaZrO_3$

Lin(Counts)

**39778**
**Mol %**
BaO-23
$TiO_2$-52,5
$SiO_2$-6
$ZrO_2$-7,5
$Al_2O_3$-9
$La_2O_3$-2

DTA /(µV/mg)
exo
865.4°C
1011°C
1062.6°C
Wendepunkt
771.5°C
1312°C
1286.6°C
T,°C

**39778(DE-844)**
Tcer. 1058°C

⊡ $Ba_4Ti_{10}Al_2O_{27}$

▽ $BaTi_4O_9$

▣ $BaAl_2Si_2O_8$

⊡ $BaZrO_3$

**39778**
**Mol %**
BaO-23
$TiO_2$-52,5
$SiO_2$-6
$ZrO_2$-7,5
$Al_2O_3$-9
$La_2O_3$-2

DTA /(µV/mg)
exo
865.4°C
1058°C
1062.6°C
Wendepunkt
771.5°C
1312°C
1286.6°C
T,°C

**Fig. 4**

**Fig. 5**

**Fig. 6**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 6184845 B1
- US 2007063902 A1
- US 20020037804 A1
- US 20040009863 A1
- JP 2006124201 A
- JP 2011195440 A
- DE 102010012524
- DE 102008011206 A1

**In der Beschreibung aufgeführte Nicht-Patentliteratur**

- **MIRSANEH et al.** Circularly Loaded Dielectric-Loaded Antennas: Current Technology and Future Chalanges. *Adv. Funct. Materials,* 2008, vol. 18, 1-8
- **M.T. SEBASTIAN et al.** Low loss dielectric materials for LTCC applications. *International Materials Reviews,* 2008, vol. 53, 57-90